# EUROPÄISCHE PATENTSCHRIFT

(11) **EP 4 214 471 B1**
(45) Veröffentlichungstag und Bekanntmachung des Hinweises auf die Patenterteilung: **24.07.2024**
(21) Anmeldenummer: 21773728.7
(22) Anmeldetag: 06.09.2021
(51) Int. Cl.: G01D 5/20

(54) **VERFAHREN UND VORRICHTUNG ZUR ERFASSUNG EINES DREHWINKELS EINER ROTIERENDEN WELLE**
METHOD AND DEVICE FOR DETECTING AN ANGLE OF ROTATION OF A ROTATING SHAFT
PROCÉDÉ ET DISPOSITIF POUR DÉTECTER UN ANGLE DE ROTATION D'UN ARBRE ROTATIF

(30) Priorität: 15.09.2020 DE 102020005639
(43) Veröffentlichungstag der Anmeldung: 26.07.2023
(73) Patentinhaber: SEW-EURODRIVE GmbH & Co. KG, 76646 Bruchsal (DE)
(72) Erfinder: KUTZ, Michael, 76661 Philippsburg (DE); SCHNEIDER, Matthias, 76646 Bruchsal (DE)
(86) Internationale Anmeldenummer: PCT/EP2021/074525
(87) Internationale Veröffentlichungsnummer: WO 2022/058195

(56) Entgegenhaltungen:
- DE-A1- 10 315 754
- DE-A1- 102017 012 027
- DE-A1- 102019 200 318
- DE-T2- 69 620 949

## Beschreibung

Die Erfindung betrifft ein Verfahren zur Erfassung eines Drehwinkels einer rotierenden Welle mittels eines Resolvers, welcher eine erste Statorwicklung, eine zweite Statorwicklung und eine Rotorwicklung aufweist, wobei die Rotorwicklung drehfest mit der Welle verbunden und relativ zu den Statorwicklungen drehbar ist. Die Erfindung betrifft auch eine Vorrichtung zur Erfassung eines Drehwinkels einer rotierenden Welle, die einen Resolver umfasst.

Durch Benutzung sind Resolver bekannt, die ein zylindrisches Gehäuse, eine erste Statorwicklung, eine zweite Statorwicklung und einen Rotor mit einer Rotorwicklung aufweisen. Die Statorwicklungen sind versetzt zueinander, beispielsweise um 90°, angeordnet und umschließen den in dem Gehäuse gelagerten Rotor mit der Rotorwicklung. Die Rotorwicklung wird beispielsweise über Schleifringe und Bürsten nach außen geführt. Alternativ sind Resolver bürstenlos ausgeführt, wobei die Information des Rotors induktiv übertragen wird. Ein Resolver liefert innerhalb einer Umdrehung ein absolutes Winkelsignal. eine Referenzierung nach dem Einschalten ist somit nicht erforderlich.

Zur Erfassung eines Drehwinkels des Rotors wird die erste Statorwicklung mit einem ersten Statorsignal erregt. Die zweite Statorwicklung wird mit einem dazu phasenverschoben, beispielsweise um 90°, zweiten Statorsignal erregt. Die Phasenlage der in der Rotorwicklung induzierten Spannung hängt von der Stellung der Rotorwicklung ab. Wenn die Rotorwicklung genau gegenüber der ersten Statorwicklung steht, so entspricht die Phasenlage der Rotorspannung der Phasenlage des ersten Statorsignals. Wenn die Rotorwicklung genau gegenüber der zweiten Statorwicklung steht, so entspricht die Phasenlage der Rotorspannung der Phasenlage des zweiten Statorsignals. Steht die Rotorwicklung zwischen den Statorwicklungen, so ist die Phasenlage der Rotorspannung zu den Phasenlagen der Statorsignale verschoben. Während einer Umdrehung des Rotors liefert der Resolver ein Resolversignal mit der Phasenlage der Rotorspannung. Die Phasenlage des Resolversignals dreht sich dabei von 0° bis 360°. Die Phasenlage des Resolversignals ist somit ein Maß für den Drehwinkel des Rotors.

Aus der DE 10 2017 012 027 A1 ist ein Verfahren zur drehgeberlosen Rotorlagebestimmung einer Drehfeldmaschine bekannt. Die Drehfeldmaschine wird dabei von einem Umrichter mit einem pulsweitenmodulierten Signal angesteuert.

Aus der DE 103 15 754 A1 ist ein Verfahren zur Bestimmung der absoluten Rotorlage oder Läuferlage von wechselrichtergespeisten Synchronmaschinen bekannt. An die Synchronmaschine ist dabei ein Inkrementalgeber gekuppelt.

Aus der DE 10 2009 032 095 A1 sind eine Anordnung und ein Verfahren zur Bestimmung einer Winkelstellung bekannt.

Aus der DE 10 2019 200 318 A1 ist eine Resolverschaltung zur Auswertung von Resolversignalen mit einem Resolver bekannt.

Aus der DE 10 2009 019 509 A1 sind ein Verfahren und eine Vorrichtung zum Bestimmen eines Rotorwinkels einer rotierenden Welle bekannt.

Aus der DE 696 20 949 T2 ist ein Verfahren zur digitalen Drehwinkelerfassung bekannt.

Der Erfindung liegt die Aufgabe zugrunde, ein Verfahren und eine Vorrichtung zur Erfassung eines Drehwinkels einer rotierenden Welle weiterzubilden.

Die Aufgabe wird erfindungsgemäß durch ein Verfahren zur Erfassung eines Drehwinkels einer rotierenden Welle mit den in Anspruch 1 angegebenen Merkmalen gelöst. Vorteilhafte Ausgestaltungen und Weiterbildungen sind Gegenstand der Unteransprüche. Die Aufgabe wird erfindungsgemäß auch durch eine Vorrichtung zur Erfassung eines Drehwinkels einer rotierenden Welle mit den in Anspruch 11 angegebenen Merkmalen gelöst.

Ein erfindungsgemäßes Verfahren dient zur Erfassung eines Drehwinkels einer rotierenden Welle mittels eines Resolvers, welcher eine erste Statorwicklung, eine zweite Statorwicklung und eine Rotorwicklung aufweist, wobei die Rotorwicklung drehfest mit der Welle verbunden und relativ zu den Statorwicklungen drehbar ist, wobei von einem Frequenzgenerator ein Erregersignal mit einer Erregerfrequenz erzeugt wird; der ersten Statorwicklung ein erstes Statorsignal mit der Erregerfrequenz zugeführt wird; der zweiten Statorwicklung ein zweites Statorsignal mit der Erregerfrequenz zugeführt wird; in der Rotorwicklung ein Resolversignal mit einer Resolverfrequenz induziert wird; von dem Resolver das Resolversignal ausgegeben wird; das Resolversignal einem Phasenschieber zugeführt wird, welcher ein erstes Korrelatorsignal mit der Resolverfrequenz und ein zu dem ersten Korrelatorsignal um 90° phasenverschobenes zweites Korrelatorsignal mit der Resolverfrequenz erzeugt; die Korrelatorsignale einem Korrelator zugeführt werden; von dem Korrelator ein Regelsignal erzeugt und ausgegeben wird; das Regelsignal einem Regler zugeführt wird; von dem Regler ein Ausgangssignal erzeugt und ausgegeben wird; das Ausgangssignal und das Erregersignal zu einem Stellsignal mit einer Stellfrequenz addiert werden; ein erstes Vergleichssignal mit der Stellfrequenz und ein zu dem ersten Vergleichssignal um 90° phasenverschobenes zweites Vergleichssignal mit der Stellfrequenz erzeugt und dem Korrelator zugeführt werden; wobei in dem Korrelator das erste Korrelatorsignal und das erste Vergleichssignal zu einem ersten Mischsignal multipliziert werden; das zweite Korrelatorsignal und das zweite Vergleichssignal zu einem zweiten Mischsignal multipliziert werden; das erste Mischsignal und das zweite Mischsignal zu dem Regelsignal summiert werden; und wobei von dem Regler das Ausgangssignal derart erzeugt wird, dass das Regelsignal auf null geregelt wird.

Eine Frequenz des Ausgangssignals entspricht einer Rotordrehzahl der Rotorwicklung sowie der Welle. Der Wert des Ausgangssignals entspricht dem Drehwinkel der Rotorwicklung sowie der Welle zwischen 0° und 360°. Der Regler regelt das Ausgangssignal verhältnismäßig schnell. Damit ist eine schnelle Erfassung des Drehwinkels der Welle möglich. Somit ist eine Erfassung des Drehwinkels der Welle auch bei verhältnismäßig hohen Rotordrehzahlen korrekt und ohne nennenswerte Verzögerung möglich.

Gemäß einer vorteilhaften Ausgestaltung der Erfindung ist die erste Statorwicklung um 90° versetzt zu der zweiten Statorwicklung angeordnet. Diese Bauweise ermöglicht eine genaue und wenig fehleranfällige Auswertung der Signale.

Gemäß einer bevorzugten Ausgestaltung der Erfindung ist das erste Statorsignal um 90° phasenverschoben zu dem zweiten Statorsignal. Diese Ausgestaltung ermöglicht eine genaue und wenig fehleranfällige Auswertung der Signale.

Gemäß einer bevorzugten Weiterbildung der Erfindung sind die Statorsignale, das Resolversignal, die Korrelatorsignale und die Vergleichssignale jeweils harmonische Wechselspannungen. Harmonische Wechselspannungen gestatten eine einfache Weiterverarbeitung mit bekannten analogen Auswerteschaltungen.

Gemäß einer vorteilhaften Ausgestaltung der Erfindung ist das erste Korrelatorsignal gleichphasig mit dem Resolversignal. Dadurch ist ein eindeutiger Bezug des Drehwinkels der Welle zu den Statorsignalen gegeben.

Gemäß einer vorteilhaften Weiterbildung der Erfindung ist der Phasenschieber als Hilbert-Transformator ausgebildet. Es hat sich gezeigt, dass ein Hilbert-Transformator zum Einsatz in dem erfindungsgemäßen Verfahren besonders geeignet ist.

Gemäß einer vorteilhaften Ausgestaltung der Erfindung ist der Regler als I-Regler, also als integrierender Regler, ausgebildet. Ein integrierender Regler wirkt durch zeitliche Integration einer Regelabweichung auf eine Stellgröße mit einer Gewichtung durch eine Nachstellzeit.

Gemäß einer vorteilhaften Ausgestaltung der Erfindung ist das Erregersignal eine Digitalzahl, welche sich in Form eines Sägezahns ändert, also ein digitales Sägezahnsignal.

Gemäß einer vorteilhaften Ausgestaltung der Erfindung ist das Ausgangssignal eine Digitalzahl, welche sich in Form eines Sägezahns ändert, also ein digitales Sägezahnsignal. Der Wert des Ausgangssignals entspricht dabei dem Drehwinkel der Rotorwicklung sowie der Welle zwischen 0° und 360° und ist daher verhältnismäßig einfach auswertbar.

Gemäß einer vorteilhaften Ausgestaltung der Erfindung ist das Stellsignal eine Digitalzahl, welche sich in Form eines Sägezahns ändert, also ein digitales Sägezahnsignal.

Eine erfindungsgemäße Vorrichtung zur Erfassung eines Drehwinkels einer rotierenden Welle, umfasst einen Resolver, welcher eine erste Statorwicklung, eine zweite Statorwicklung und eine Rotorwicklung aufweist, wobei die Rotorwicklung drehfest mit der Welle verbunden und relativ zu den Statorwicklungen drehbar ist, einen Frequenzgenerator zur Erzeugung eines Erregersignals mit einer Erregerfrequenz, einen Phasenschieber zur Erzeugung eines ersten Korrelatorsignals und eines zu dem ersten Korrelatorsignal um 90° phasenverschobenen zweiten Korrelatorsignals, einen Korrelator zur Erzeugung eines Regelsignals und einen Regler zur Erzeugung eines Ausgangssignals. Dabei ist die erfindungsgemäße Vorrichtung zur Ausführung des erfindungsgemäßen Verfahrens eingerichtet.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigt:

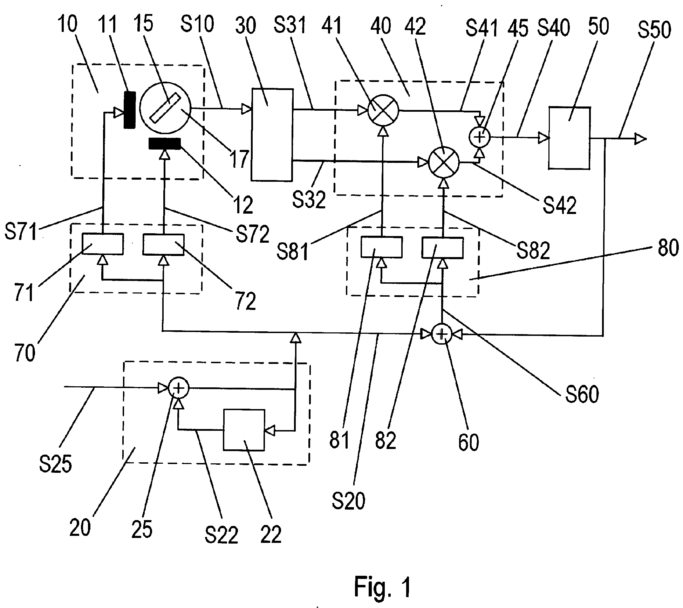

- Figur 1:: eine schematische Darstellung einer Vorrichtung zur Erfassung eines Drehwinkels einer rotierenden Welle.

Figur 1 zeigt eine schematische Darstellung einer Vorrichtung zur Erfassung eines Drehwinkels einer rotierenden Welle 17. Die besagte Vorrichtung umfasst unter anderem einen Resolver 10. Der Resolver 10 weist eine erste Statorwicklung 11, eine zweite Statorwicklung 12 und eine Rotorwicklung 15 auf. Die Rotorwicklung 15 ist drehfest mit der Welle 17 verbunden und relativ zu den beiden Statorwicklungen 11, 12 drehbar. Die erste Statorwicklung 11 ist dabei, bezüglich der rotationssymmetrischen Welle 17, um 90° versetzt zu der zweiten Statorwicklung 12 angeordnet.

Die Vorrichtung umfasst ferner einen Frequenzgenerator 20 zur Erzeugung eines Erregersignals S20 mit einer Erregerfrequenz. Dem Frequenzgenerator 20 wird ein Eingangssignal S25 in Form einer Digitalzahl zugeführt. Der Frequenzgenerator 20 weist einen Hilfsaddierer 25 auf, welcher das Eingangssignal S25 und ein Hilfssignal S22 zu dem Erregersignal S20 addiert. Der Frequenzgenerator 20 weist einen Verzögerer 22 auf, welcher das Erregersignal S20 mit einer definierten zeitlichen Verzögerung als Hilfssignal S22 durchleitet. Das Hilfssignal S22 ist ebenfalls eine Digitalzahl. Von dem Frequenzgenerator 20 wird somit ein Erregersignal S20 mit der Erregerfrequenz erzeugt, wobei das Erregersignal S20 eine Digitalzahl ist, welche sich in Form eines Sägezahns ändert.

Die Vorrichtung umfasst auch eine Vorsignalgeneratoreinheit 70, welche einen ersten Vorsignalgenerator 71 und einen zweiten Vorsignalgenerator 72 aufweist. Das Erregersignal S20 wird den beiden Vorsignalgeneratoren 71, 72 der Vorsignalgeneratoreinheit 70 zugeführt. Der erste Vorsignalgenerator 71 erzeugt daraus ein erstes Statorsignal S71 mit der Erregerfrequenz. Der zweite Vorsignalgenerator 72 erzeugt daraus ein zweites Statorsignal S72 mit der Erregerfrequenz.

Die Erzeugung der Statorsignale S71, S72 erfolgt mittels eines Verfahrens, welches als direkte digitale Synthese (DDS) bezeichnet wird. Die erzeugten Statorsignale S71, S72 sind jeweils harmonische Wechselspannungen. Das erste Statorsignal S71 ist gleichphasig mit dem Erregersignal S20. Das zweite Statorsignal S72 ist zu dem ersten Statorsignal S71 sowie zu dem Erregersignal S20 um 90° phasenverschoben.

Der ersten Statorwicklung 11 wird das erste Statorsignal S71 mit der Erregerfrequenz zugeführt. Der zweiten Statorwicklung 12 wird das zweite Statorsignal S72 mit der Erregerfrequenz zugeführt. Durch die magnetische Kopplung zwischen den Statorwicklungen 11, 12 und der Rotorwicklung 15 wird in der Rotorwicklung 15 eine Rotorspannung induziert, welche beispielsweise über Schleifringe in Form eines Resolversignals S10 nach außen geführt wird. In der Rotorwicklung 15 wird also das Resolversignal S10 mit einer Resolverfrequenz induziert. Das Resolversignal S10 wird von dem Resolver 10 ausgegeben. Das Resolversignal S10 ist eine harmonische Wechselspannung.

Die Phasenlage des Resolversignals S10 hängt von der Stellung der Rotorwicklung 15 ab. Wenn die Rotorwicklung 15 genau gegenüber der ersten Statorwicklung 11 steht, so entspricht die Phasenlage der Rotorspannung 15 der Phasenlage des ersten Statorsignals S71. Wenn die Rotorwicklung 15 genau gegenüber der zweiten Statorwicklung 12 steht, so entspricht die Phasenlage der Rotorspannung der Phasenlage des zweiten Statorsignals S72. Steht die Rotorwicklung 15 zwischen den Statorwicklungen 11, 12, so ist die Phasenlage der Rotorspannung zu den Phasenlagen der Statorsignale S71, S72 verschoben. Während einer Umdrehung der Welle 17 liefert der Resolver 10 also ein Resolversignal S10 mit der Phasenlage der Rotorspannung.

Die Vorrichtung umfasst ferner einen Phasenschieber 30 zur Erzeugung eines ersten Korrelatorsignals S31 und eines zu dem ersten Korrelatorsignal S31 um 90° phasenverschobenen zweiten Korrelatorsignals S32. Der Phasenschieber 30 ist beispielsweise als Hilbert-Transformator ausgebildet.

Das Resolversignal S10 wird dem Phasenschieber 30 zugeführt, welcher ein erstes Korrelatorsignal S31 mit der Resolverfrequenz und ein zu dem ersten Korrelatorsignal S31 um 90° phasenverschobenes zweites Korrelatorsignal S32 mit der Resolverfrequenz erzeugt. Die erzeugten Korrelatorsignale S31, S32 sind jeweils harmonische Wechselspannungen. Das erste Korrelatorsignal S31 ist gleichphasig mit dem Resolversignal S10. Das zweite Korrelatorsignal S32 ist zu dem ersten Korrelatorsignal S31 sowie zu dem Resolversignal S10 um 90° phasenverschoben.

Die Vorrichtung umfasst ferner einen Korrelator 40 zur Erzeugung eines Regelsignals S40. Der Korrelator 40 weist einen ersten Multiplizierer 41, einen zweiten Multiplizierer 42 und einen Summierer 45 auf. Die Korrelatorsignale S31, S32 werden dem Korrelator 40 zugeführt. Von dem Korrelator 40 wird ein Regelsignal S40 erzeugt und ausgegeben. Das Regelsignal S40 ist eine zeitlich veränderliche Gleichspannung ohne feste Periode.

Die Vorrichtung umfasst ferner einen Regler 50 zur Erzeugung eines Ausgangssignals S50. Der Regler 50 ist als I-Regler, also als integrierender Regler, ausgebildet. Das Regelsignal S40 wird dem Regler 50 zugeführt. Von dem Regler 50 wird ein Ausgangssignal S50 erzeugt und ausgegeben. Das Ausgangssignal S50 wird dabei von dem Regler 50 derart erzeugt, dass das Regelsignal S40 auf null geregelt wird. Das Ausgangssignal S50 ist eine Digitalzahl, welche sich in Form eines Sägezahns ändert.

Die Vorrichtung umfasst auch einen Hauptaddierer 60. Dem Hauptaddierer 60 werden das Erregersignal S20 und das Ausgangssignal S50 zugeführt. Das Ausgangssignal S50 und das Erregersignal S20 werden von dem Hauptaddierer 60 zu einem Stellsignal S60 mit einer Stellfrequenz addiert. Das Stellsignal S60 ist eine Digitalzahl, welche sich in Form eines Sägezahns ändert.

Die Vorrichtung umfasst auch eine Hauptsignalgeneratoreinheit 80, welche einen ersten Hauptsignalgenerator 81 und einen zweiten Hauptsignalgenerator 82 aufweist. Das Stellsignal S60 wird den beiden Hauptsignalgeneratoren 81, 82 der Hauptsignalgeneratoreinheit 80 zugeführt. Der erste Hauptsignalgenerator 81 erzeugt daraus ein erstes Vergleichssignal S81 mit der Stellfrequenz. Der zweite Hauptsignalgenerator 82 erzeugt daraus ein zweites Vergleichssignal S82 mit der Stellfrequenz.

Die Erzeugung der Vergleichssignale S81, S82 erfolgt mittels eines Verfahrens, welches als direkte digitale Synthese (DDS) bezeichnet wird. Die erzeugten Vergleichssignale S81, S82 sind jeweils harmonische Wechselspannungen. Das erste Vergleichssignal S81 ist gleichphasig mit dem Stellsignal S60. Das zweite Vergleichssignal S82 ist zu dem ersten Statorsignal S71 sowie zu dem Stellsignal S60 um 90° phasenverschoben.

Das erste Vergleichssignal S81 mit der Stellfrequenz und das zu dem ersten Vergleichssignal S81 um 90° phasenverschobene zweite Vergleichssignal S82 mit der Stellfrequenz werden dem Korrelator 40 zugeführt.

In dem Korrelator 40 werden das erste Korrelatorsignal S31 und das erste Vergleichssignal S81 von dem ersten Multiplizierer 41 zu einem ersten Mischsignal S41 multipliziert. In dem Korrelator 40 werden das zweite Korrelatorsignal S32 und das zweite Vergleichssignal S82 von dem zweiten Multiplizierer 42 zu einem zweiten Mischsignal S42 multipliziert. Das erste Mischsignal S41 und das zweite Mischsignal S42 werden von dem Summierer 45 zu dem Regelsignal S40 summiert.

Wenn das erste Vergleichssignal S81 um 90° zu dem ersten Korrelatorsignal S31 verschoben ist, so ist das erste Mischsignal S41 gleich null. Wenn das zweite Vergleichssignal S82 um 90° zu dem zweiten Korrelatorsignal S32 verschoben ist, so ist das zweite Mischsignal S42 gleich null. Wenn die beiden Mischsignale S41, S42 gleich null sind, so ist auch das Regelsignal S40 gleich null.

Die Rotorwicklung 15 dreht sich zusammen mit der Welle 17 beispielsweise mit einer Rotordrehzahl von 100 Hz. Die Erregerfrequenz beträgt beispielsweise 50 kHz, ist also deutlich größer als die Rotordrehzahl.

Das Resolversignal S10 ist gegenüber dem ersten Statorsignal S71 um den jeweiligen Drehwinkel der Rotorwicklung 15 phasenverschoben. Wenn die Rotorwicklung 15 genau gegenüber der ersten Statorwicklung 11 steht, so beträgt die Phasenverschiebung 0°. Wenn die Rotorwicklung 15 genau gegenüber der zweiten Statorwicklung 12 steht, so beträgt die Phasenverschiebung 90°. Während einer Drehung der Rotorwicklung 15 ändert sich die Phasenverschiebung von 0° bis 360°. Die Phasenverschiebung des Resolversignals S10 gegenüber dem ersten Statorsignal S71 ist somit ein Maß für den Drehwinkel der Welle 17. Die Resolverfrequenz entspricht einer Summe aus der Erregerfrequenz und der Rotordrehzahl.

Das Ausgangssignal S50 ist eine Digitalzahl, welche sich in Form eines Sägezahns ändert. Eine Frequenz des Ausgangssignals S50 entspricht der Rotordrehzahl. Der Wert des Ausgangssignals S50 entspricht dem Drehwinkel der Rotorwicklung 15 sowie der Welle 17 zwischen 0° und 360°.

Die Stellfrequenz entspricht einer Summe aus der Erregerfrequenz und der Frequenz des Ausgangssignals S50.

### Bezugszeichenliste

- 10: Resolver
- 11: erste Statorwicklung
- 12: zweite Statorwicklung
- 15: Rotorwicklung
- 17: Welle
- 20: Frequenzgenerator
- 22: Verzögerer
- 25: Hilfsaddierer
- 30: Phasenschieber
- 40: Korrelator
- 41: erster Multiplizierer
- 42: zweiter Multiplizierer
- 45: Summierer
- 50: Regler
- 60: Hauptaddierer
- 70: Vorsignalgeneratoreinheit
- 71: erster Vorsignalgenerator
- 72: zweiter Vorsignalgenerator
- 80: Hauptsignalgeneratoreinheit
- 81: erster Hauptsignalgenerator
- 82: zweiter Hauptsignalgenerator

- S10: Resolversignal
- S20: Erregersignal
- S22: Hilfssignal
- S25: Eingangssignal
- S31: erstes Korrelatorsignal
- S32: zweites Korrelatorsignal
- S40: Regelsignal
- S41: erstes Mischsignal
- S42: zweites Mischsignal
- S50: Ausgangssignal
- S60: Stellsignal
- S71: erstes Statorsignal
- S72: zweites Statorsignal
- S81: erstes Vergleichssignal
- S82: zweites Vergleichssignal

## Patentansprüche

1. Verfahren zur Erfassung eines Drehwinkels einer rotierenden Welle (17),
mittels eines Resolvers (10), welcher eine erste Statorwicklung (11), eine zweite Statorwicklung (12) und eine Rotorwicklung (15) aufweist, wobei die Rotorwicklung (15) drehfest mit der Welle (17) verbunden und relativ zu den Statorwicklungen (11, 12) drehbar ist, wobei
von einem Frequenzgenerator (20) ein Erregersignal (S20) mit einer Erregerfrequenz erzeugt wird;
der ersten Statorwicklung (11) ein erstes Statorsignal (S71) mit der Erregerfrequenz zugeführt wird;
der zweiten Statorwicklung (12) ein zweites Statorsignal (S72) mit der Erregerfrequenz zugeführt wird;
in der Rotorwicklung (15) ein Resolversignal (S10) mit einer Resolverfrequenz induziert wird; von dem Resolver (10) das Resolversignal (S10) ausgegeben wird;
das Resolversignal (S10) einem Phasenschieber (30) zugeführt wird,
welcher ein erstes Korrelatorsignal (S31) mit der Resolverfrequenz und ein zu dem ersten Korrelatorsignal (S31) um 90° phasenverschobenes zweites Korrelatorsignal (S32) mit der Resolverfrequenz erzeugt;
die Korrelatorsignale (S31, S32) einem Korrelator (40) zugeführt werden;
von dem Korrelator (40) ein Regelsignal (S40) erzeugt und ausgegeben wird;
das Regelsignal (S40) einem Regler (50) zugeführt wird;
von dem Regler (50) ein Ausgangssignal (S50) erzeugt und ausgegeben wird;
das Ausgangssignal (S50) und das Erregersignal (S20) zu einem Stellsignal (S60) mit einer Stellfrequenz addiert werden;
ein erstes Vergleichssignal (S81) mit der Stellfrequenz und ein zu dem ersten Vergleichssignal (S81) um 90° phasenverschobenes zweites Vergleichssignal (S82) mit der Stellfrequenz erzeugt und dem Korrelator (40) zugeführt werden; wobei
in dem Korrelator (40)
das erste Korrelatorsignal (S31) und das erste Vergleichssignal (S81) zu einem ersten Mischsignal (S41) multipliziert werden;
das zweite Korrelatorsignal (S32) und das zweite Vergleichssignal (S82) zu einem zweiten Mischsignal (S42) multipliziert werden;
das erste Mischsignal (S41) und das zweite Mischsignal (S42) zu dem Regelsignal (S40) summiert werden; und wobei
von dem Regler (50) das Ausgangssignal (S50) derart erzeugt wird, dass das Regelsignal (S40) auf null geregelt wird.

2. Verfahren nach Anspruch 1, wobei die erste Statorwicklung (11) um 90° versetzt zu der zweiten Statorwicklung (12) angeordnet ist.

3. Verfahren nach mindestens einem der vorangegangenen Ansprüche, wobei das erste Statorsignal (S71) um 90° phasenverschoben zu dem zweiten Statorsignal (S72) ist.

4. Verfahren nach mindestens einem der vorangegangenen Ansprüche, wobei
die Statorsignale (S71, S72),
das Resolversignal (S10),
die Korrelatorsignale (S31, S32) und
die Vergleichssignale (S81, S82)
jeweils harmonische Wechselspannungen sind.

5. Verfahren nach mindestens einem der vorangegangenen Ansprüche, wobei das erste Korrelatorsignal (S31) gleichphasig mit dem Resolversignal (S10) ist.

6. Verfahren nach mindestens einem der vorangegangenen Ansprüche, wobei der Phasenschieber (30) als Hilbert-Transformator ausgebildet ist.

7. Verfahren nach mindestens einem der vorangegangenen Ansprüche, wobei der Regler (50) als I-Regler ausgebildet ist.

8. Verfahren nach mindestens einem der vorangegangenen Ansprüche, wobei das Erregersignal (S20) eine Digitalzahl ist, welche sich in Form eines Sägezahns ändert.

9. Verfahren nach mindestens einem der vorangegangenen Ansprüche, wobei das Ausgangssignal (S50) eine Digitalzahl ist, welche sich in Form eines Sägezahns ändert.

10. Verfahren nach mindestens einem der vorangegangenen Ansprüche, wobei das Stellsignal (S60) eine Digitalzahl ist, welche sich in Form eines Sägezahns ändert.

11. Vorrichtung zur Erfassung eines Drehwinkels einer rotierenden Welle (17), umfassend
einen Resolver (10), welcher eine erste Statorwicklung (11), eine zweite Statorwicklung (12) und eine Rotorwicklung (15) aufweist, wobei die Rotorwicklung (15) drehfest mit der Welle (17) verbunden und relativ zu den Statorwicklungen (11, 12) drehbar ist,
einen Frequenzgenerator (20) zur Erzeugung eines Erregersignals (S20) mit einer Erregerfrequenz,
einen Phasenschieber (30) zur Erzeugung eines ersten Korrelatorsignals (S31) und eines zu dem ersten Korrelatorsignal (S31) um 90° phasenverschobenen zweiten Korrelatorsignals (S32),
einen Korrelator (40) zur Erzeugung eines Regelsignals (S40) und
einen Regler (50) zur Erzeugung eines Ausgangssignals (S50), wobei
die Vorrichtung zur Ausführung des Verfahrens nach mindestens einem der vorangegangenen Ansprüche eingerichtet ist.

## Claims

1. Method for detecting an angle of rotation of a rotating shaft (17) by means of a resolver (10) that has a first stator winding (11), a second stator winding (12) and a rotor winding (15), wherein the rotor winding (15) is connected to the shaft (17) for conjoint rotation and is rotatable relative to the stator windings (11, 12), wherein
an exciter signal (S20) having an exciter frequency is generated by a frequency generator (20);
the first stator winding (11) is fed a first stator signal (S71) having the exciter frequency;
the second stator winding (12) is fed a second stator signal (S72) having the exciter frequency;
a resolver signal (S10) having a resolver frequency is induced in the rotor winding (15);
the resolver signal (S10) is output by the resolver (10);
the resolver signal (S10) is fed to a phase shifter (30), which generates a first correlator signal (S31) having the resolver frequency and a second correlator signal (S32) having the resolver frequency and phase-shifted by 90° in relation to the first correlator signal (S31); the correlator signals (S31, S32) are fed to a correlator (40);
a control signal (S40) is generated and output by the correlator (40);
the control signal (S40) is fed to a controller (50);
an output signal (S50) is generated and output by the controller (50);
the output signal (S50) and the exciter signal (S20) are added together to form an actuating signal (S60) having an actuating frequency;
a first comparative signal (S81) having the actuating frequency and a second comparative signal (S82) having the actuating frequency and phase-shifted by 90° in relation to the first comparative signal (S81) are generated and fed to the correlator (40); wherein
in the correlator (40)
the first correlator signal (S31) and the first comparative signal (S81) are multiplied to form a first mixed signal (S41);
the second correlator signal (S32) and the second comparative signal (S82) are multiplied to form a second mixed signal (S42);
the first mixed signal (S41) and the second mixed signal (S42) are added up to form the control signal (S40); and wherein
the output signal (S50) is generated by the controller (50) in such a way that the control signal (S40) is controlled to zero.

2. Method according to claim 1, wherein
the first stator winding (11) is arranged so as to be offset from the second stator winding (12) by 90°.

3. Method according to at least one of the preceding claims, wherein
the first stator signal (S71) is phase-shifted by 90° in relation to the second stator signal (S72).

4. Method according to at least one of the preceding claims, wherein
the stator signals (S71, S72), the resolver signal (S10), the correlator signals (S31, S32) and the comparative signals (S81, S82) are each harmonic AC voltages.

5. Method according to at least one of the preceding claims, wherein
the first correlator signal (S31) is in phase with the resolver signal (S10).

6. Method according to at least one of the preceding claims, wherein
the phase shifter (30) is in the form of a Hilbert transformer.

7. Method according to at least one of the preceding claims, wherein
the controller (50) is in the form of an I controller.

8. Method according to at least one of the preceding claims, wherein
the exciter signal (S20) is a digital number that changes in the form of a saw tooth.

9. Method according to at least one of the preceding claims, wherein
the output signal (S50) is a digital number that changes in the form of a saw tooth.

10. Method according to at least one of the preceding claims, wherein
the actuating signal (S60) is a digital number that changes in the form of a saw tooth.

11. Device for detecting an angle of rotation of a rotating shaft (17), comprising
a resolver (10) that has a first stator winding (11), a second stator winding (12) and a rotor winding (15), wherein the rotor winding (15) is connected to the shaft (17) for conjoint rotation and is rotatable relative to the stator windings (11, 12),
a frequency generator (20) for generating an exciter signal (S20) having an exciter frequency,
a phase shifter (30) for generating a first correlator signal (S31) and a second correlator signal (S32), which is phase-shifted by 90° in relation to the first correlator signal (S31),
a correlator (40) for generating a control signal (S40) and
a controller (50) for generating an output signal (S50), wherein
the device is configured for carrying out the method according to at least one of the preceding claims.

## Revendications

1. Procédé de détection d'un angle de rotation d'un arbre rotatif (17), au moyen d'un synchro(10) présentant un premier enroulement statorique (11), un second enroulement statorique (12) et un enroulement rotorique (15), où l'enroulement rotorique (15) est relié de manière solidaire en rotation à l'arbre (17) et peut tourner par rapport aux enroulements statoriques (11, 12), où
un signal d'excitation (S20) présentant une fréquence d'excitation est généré par un générateur de fréquence (20) ;
un premier signal statorique (S71) présentant la fréquence d'excitation est envoyé au premier enroulement statorique (11) ;
un second signal statorique (S72) présentant la fréquence d'excitation est envoyé au second enroulement statorique (12) ;
un signal de synchro (510) présentant une fréquence de synchro est induit dans l'enroulement rotorique (15) ;
le signal de synchro (S10) est délivré par le synchro (10) ;
le signal de synchro (S10) est envoyé à un déphaseur (30) qui génère un premier signal de corrélateur (S31) présentant la fréquence de synchro et un second signal de corrélateur (S32) présentant la fréquence de synchro déphasé de 90° par rapport au premier signal de corrélateur (S31) ;
les signaux de corrélateur (S31, S32) sont envoyés à un corrélateur (40) ;
un signal de régulation (S40) est généré et délivré par le corrélateur (40) ;
le signal de régulation (S40) est envoyé à un régulateur (50) ;
un signal de sortie (S50) est généré et délivré par le régulateur (50) ;
le signal de sortie (S50) et le signal d'excitation (S20) sont ajoutés à un signal de réglage (S60) présentant une fréquence de réglage ;
un premier signal de comparaison (S81) présentant la fréquence de réglage et un second signal de comparaison (S82) présentant la fréquence de réglage et déphasé de 90° par rapport au premier signal de comparaison (S81) sont générés et envoyés au corrélateur (40) ; où
au sein du corrélateur (40),
le premier signal de corrélateur (S31) et le premier signal de comparaison (S81) sont multipliés pour fournir un premier signal mixte (S41) ;
le second signal corrélateur (S32) et le second signal de comparaison (S82) sont multipliés pour fournir un second signal mixte (S42) ;
le premier signal mixte (S41) et le second signal mixte (S42) sont additionnés pour fournir le signal de régulation (S40) ; et où
le signal de sortie (S50) est généré par le régulateur (50) de telle manière que le signal de régulation (S40) est régulé à zéro.

2. Procédé selon la revendication 1, où
le premier enroulement statorique (11) est agencé en étant décalé de 90° par rapport au second enroulement statorique (12).

3. Procédé selon au moins l'une quelconque des revendications précédentes, où
le premier signal statorique (S71) est déphasé de 90° par rapport au second signal statorique (S72).

4. Procédé selon au moins l'une quelconque des revendications précédentes, où
les signaux statoriques (S71, S72),
le signal de synchro (S10),
les signaux de corrélateur (S31, S32) et
les signaux de comparaison (S81, S82)
sont respectivement des tensions alternatives harmoniques.

5. Procédé selon au moins l'une quelconque des revendications précédentes, où le premier signal de corrélateur (S31) est de même phase que le signal de synchro (S10).

6. Procédé selon au moins l'une quelconque des revendications précédentes, où le déphaseur (30) est conçu comme un transformateur de Hilbert.

7. Procédé selon au moins l'une quelconque des revendications précédentes, où le régulateur (50) est conçu comme un régulateur intégral.

8. Procédé selon au moins l'une quelconque des revendications précédentes, où le signal d'excitation (S20) est un nombre numérique qui se modifie en dents de scie.

9. Procédé selon au moins l'une quelconque des revendications précédentes, où le signal de sortie (S50) est un nombre numérique qui se modifie en dents de scie.

10. Procédé selon au moins l'une quelconque des revendications précédentes, où le signal de réglage (S60) est un nombre numérique se modifie en dents de scie.

11. Dispositif de détection d'un angle de rotation d'un arbre rotatif (17), comprenant
un synchro(10) présentant un premier enroulement statorique (11), un second enroulement statorique (12) et un enroulement rotorique (15), où l'enroulement rotorique (15) est relié de manière solidaire en rotation à l'arbre (17) et peut tourner par rapport aux enroulements statoriques (11, 12),
un générateur de fréquence (20) permettant de générer un signal d'excitation (S20) présentant une fréquence d'excitation,
un déphaseur (30) permettant de générer un premier signal de corrélateur (S31) et un second signal de corrélateur (S32) déphasé de 90° par rapport au premier signal de corrélateur (S31),
un corrélateur (40) permettant de générer un signal de régulation (S40) et
un régulateur (50) permettant de générer un signal de sortie (S50), où
le dispositif est configuré pour mettre en oeuvre le procédé selon au moins l'une quelconque des revendications précédentes.
